# EUROPEAN PATENT SPECIFICATION

(11) **EP 3 603 957 B1**
(45) Date of publication and mention of the grant of the patent: **21.10.2026**
(21) Application number: 18777508.5
(22) Date of filing: 28.02.2018
(51) Int. Cl.: B32B 25/08, B32B 1/08, C08K 3/18, C08L 33/16, C08L 71/03, F16L 11/04, B32B 7/10, B32B 25/04, B32B 25/18, B32B 25/16, B32B 25/14

(54) **LAMINATE**
LAMINAT
STRATIFIÉ

(30) Priority: 30.03.2017 JP 2017068391
(43) Date of publication of application: 05.02.2020
(73) Proprietor: Mitsui Chemicals, Inc., Tokyo 104-0028 (JP)
(72) Inventor: KIKUCHI, Yoshiharu, Ichihara-shi Chiba 299-0108 (JP); ICHINO, Kotaro, Ichihara-shi Chiba 299-0108 (JP)
(74) Representative: J A Kemp LLP
(86) International application number: PCT/JP2018/007415
(87) International publication number: WO 2018/180140

(56) References cited:
- EP-A1- 2 653 308
- JP-A- 2012 081 682
- JP-A- 2012 081 682
- JP-A- 2013 176 961
- JP-A- 2013 176 961
- JP-A- 2014 226 853
- JP-A- 2014 226 853
- US-A1- 2004 253 403
- ELASTOMERWERKSTOFFE TECHNISCHE: "BT DIE BIBLIOTHEK DER TECHNIK 293 VERLAG MODERNE INDUSTRIE Basis für Hightech-Lösungen in der Dichtungs- und Schwingungstechnik", 31 December 2006 (2006-12-31), XP093010335, Retrieved from the Internet <URL:https://www.fst.com/-/media/files/fst,-d-,com/products/material%20expertise/broschures/freudenberg_dt_technische%20elastomerwerkstoffe-web.pdf> [retrieved on 20221221]
- ALL SEALS INC: "Section 3 Elastomers/Materials - Chemical Terms, Abbreviations, Trade Names 3-18 3-12 3-3 3-2 3-1", 31 December 2003 (2003-12-31), XP093010338, Retrieved from the Internet <URL:https://www.allsealsinc.com/03_Elastomers-Materials.pdf> [retrieved on 20221221]

## Description

### Technical Field

The present invention relates to a laminate in which different kinds of halogen-containing rubbers having excellent adhesiveness are bonded.

### Background Art

Fluorine-based rubbers are excellent in thermal resistance, oil resistance, chemical resistance, weather resistance and the like and are useful for industrial materials or in other fields. However, fluorine-based rubbers are expensive, and economic efficiency is not negligible in versatilely using them in these fields. Therefore, despite having outstanding performance, amounts of fluorine-based rubbers to be used cannot be expected to massively increase so far.

On the other hand, since halogen-containing rubbers such as an acrylic rubber (ACM), which is a homopolymer of an acrylic acid ester or a copolymer of an acrylic acid ester and 2-chloroethyl vinyl ether, and an epichlorohydrin rubber (ECO) are excellent in oil resistance, thermal resistance, weather resistance and the like, they are widely used in functional parts such as various sealing materials, gaskets, packings, and thermal resistant and oil resistant hoses such as oil hoses and air hoses with a central focus on automotive application.

In recent years, a temperature in an engine room gets increasingly higher for the purpose of improvement in performance or improvement in fuel economy of automobiles, a material having improved thermal resistant performance as compared to conventional thermal resistant and oil resistant hoses is required.

Since industrial hoses including the above thermal resistant and oil resistant hoses are required to have various physical properties such as strength, flexibility, thermal resistance, bending resistance and solvent resistance, it is difficult that only one kind of rubber satisfies all properties required. Therefore, attempts have been made to use rubbers having different properties (for example, the fluorine-based rubber and the halogen-containing rubber described above) in a laminate.

However, since adhesiveness between a fluorine-based rubber and a halogen-containing rubber is poor, various methods such as a method in which a peroxide, quaternary ammonium bromide, an epoxidized fatty acid ester and the like are compounded in an acrylic elastomer (Patent Document 1); a method in which a silica-based filler and an organic peroxide are compounded in a fluorine-based rubber, and a silica-based filler, an organic peroxide and a silane coupling agent are compounded in an acrylic rubber (Patent Document 2); and a method in which a metal oxide is compounded in any of a fluorine-based rubber and a halogen-containing rubber (Patent Document 3) are proposed, for example. JP2012081682A proposes a rubber composition for vulcanizing containing epichlorohydrin rubber, strong base compound which has an amidine frame in a molecule, and epoxy resin.

However, whichever method is employed, adhesive strength between a fluorine-based rubber and a halogen-containing rubber is still poor for use in a thermal resistant and oil resistant hose.

### Citation List

### Patent Documents

Patent Document 1: JP S61-189934 A
Patent Document 2: JP H01-152060 A
Patent Document 3: WO 2003/039858

### Summary of Invention

### Technical Problem

An object of the present invention is to give a laminate of different kinds of halogen-containing rubbers (polymers) having excellent bonding strength.

### Solution to Problem

The present invention is directed to a laminate including the following layers (1) and (2) directly bonded to each other.

Layer (1): a layer of a composition including 100 parts by mass of a halogen-based rubber (A) that is one or more selected from an epichlorohydrin rubber (ECO) and an acrylic rubber (ACM), 1 to 30 parts by mass of an inorganic compound (B) containing at least one element selected from Group 2 elements and Group 13 elements and an oxygen atom,
10 to 300 parts by mass of carbon black, and
   0.2 parts by mass or more and 10 parts by mass or less of an onium salt that is dialkyl (C₁₄₋₁₈) dimethylammonium chloride; and
Layer (2): a layer of a halogen-containing polymer (C) (excluding the halogen-based rubber of the layer (1)),
   wherein the halogen-containing polymer (C) is a fluorine-based rubber selected from the group consisting of elastomers of a vinylidene fluoride (VdF)/hexafluoropropylene (HFP) copolymer, a VdF/tetrafluoroethylene (TFE)/HFP copolymer, a VdF/TFE/perfluoro(alkylvinyl ether) (PAVE) copolymer, a TFE/propylene/VdF copolymer, an HFP/ethylene/VdF copolymer, a TFE/propylene copolymer and an HFP/ethylene copolymer, and
contains a polyol-based crosslinking agent.

### Advantageous Effect of Invention

Conventionally, even if a layer which includes a halogen-based rubber (A) such as an epichlorohydrin rubber (ECO) or an acrylic rubber (ACM) and a layer which includes a halogen-containing polymer (C) such as a fluorine-based rubber are directly bonded to each other, a laminate having firm adhesive strength (peel strength) has not been able to be obtained. However, since, in the laminate of the present invention are firmly bonded the layer which includes a halogen-based rubber (A) that is one or more selected from an epichlorohydrin rubber (ECO) and an acrylic rubber (ACM) and the layer which includes a halogen-containing polymer (C) such as a fluorine-based rubber, the laminate of the present invention may be preferably used for applications of thermal resistant and oil resistant hoses and the like.

### Description of Embodiments

### <Layer (1)>

The layer (1) constituting the laminate of the present invention is a layer of a composition including a halogen-based rubber (A) that is one or more selected from an epichlorohydrin rubber (ECO) and an acrylic rubber (ACM), 1 to 30 parts by mass of an inorganic compound (B) (hereinafter abbreviated as "inorganic compound (B)" in some cases) containing at least one element selected from Group 2 elements and Group 13 elements and an oxygen atom, with respect to 100 parts by mass of the halogen-based rubber (A), 10 to 300 parts by mass of carbon black, and

**0.2** parts by mass or more and 10 parts by mass or less of an onium salt that is dialkyl (C₁₄₋₁₈) dimethylammonium chloride.

### <Halogen-based rubber (A)>

The halogen-based rubber (A) forming the layer (1) of the laminate of the present invention is a rubber including a halogen atom in its molecule and is preferably a rubber having a structural unit derived from a halogen-containing monomer. Specifically, the halogen-based rubber (A) is one or more selected from an epichlorohydrin rubber (ECO) and an acrylic rubber (ACM).

While the halogen atoms include a chlorine atom, a bromine atom, an iodine atom and the like, the halogen-based rubber is preferably a rubber including a chlorine atom.

The halogen-based rubber (A) according to the present invention is one or more selected from an epichlorohydrin rubber (ECO) and an acrylic rubber (ACM).

An epichlorohydrin rubber (ECO) and/or an acrylic rubber (ACM) are used because a laminate excellent in thermal resistance and oil resistance may be obtained.

### <Inorganic compound (B)>

The inorganic compound (B) compounded in the halogen-based rubber (A) forming the layer (1) of the laminate of the present invention is an inorganic compound containing at least one element selected from Group 2 elements and Group 13 elements, and an oxygen atom.

The inorganic compound (B) according to the present invention is not particularly limited as long as it is an inorganic compound containing at least one element selected from Group 2 elements and Group 13 elements, and an oxygen atom, and examples thereof include an oxide, a hydroxide, a carbonate and a hydrotalcite compound each including at least one element selected from Group 2 elements and Group 13 elements.

As the at least one element selected from Group 2 elements and Group 13 elements, at least one element selected from Mg, Ca, Ba and Al is exemplified.

Commercial products may be used as the inorganic compound (B) according to the present invention, and examples thereof include "Kyowamag 150" (manufactured by Kyowa Chemical Industry Co., Ltd., magnesium oxide) and "DHT-4A" (manufactured by Kyowa Chemical Industry Co., Ltd., a hydrotalcite compound: Mg_{4.3}Al₂(OH)_{12.6}CO₃·mH₂O).

The inorganic compound (B) according to the present invention is included in a range of 1 to 30 parts by mass, preferably 2 to 30 parts by mass, and more preferably 5 to 30 parts by mass with respect to 100 parts by mass of the halogen-based rubber (A).

When the halogen-based rubber (A) forming the layer (1) includes the inorganic compound (B) in the above range, a laminate excellent in adhesive strength (peel strength) with the layer (2) may be obtained.

In addition, the halogen-based rubber (A) forming the layer (1) may further include the inorganic compound (B) in a range of 10 to 30 parts by mass, and more preferably 15 to 30 parts by mass. The content of the inorganic compound (B) is preferably 10 parts by mass or more from the viewpoint of thermal stability, and the content is preferably 15 parts by mass or more from the viewpoint of thermal stability and processability.

### <Other compounding agents>

Carbon black and an onium salt that is dialkyl (C₁₄₋₁₈) dimethylammonium chloride are added to the halogen-based rubber (A) forming the layer (1) according to the present invention in addition to the inorganic compound (B). Furthermore, various additives usually compounded in rubber can be added to the halogen-based rubber (A) forming the layer (1) according to the present invention in addition to the inorganic compound (B), carbon black, and the onium salt that is dialkyl (C₁₄₋₁₈) dimethylammonium chloride.

As the other additives, the following additives can be exemplified, for example.

More specific examples include an organic peroxide, carbon black, an antiaging agent, a softening agent, a metal oxide, a crosslinking aid and an onium salt.

### <<Organic peroxide>>

Specific examples of the organic peroxide according to the present invention include dicumyl peroxide, di-tert-butyl peroxide, 2,5-di-(tert-butylperoxy)hexane, 2,5-dimethyl-2,5-di-(tert-butylperoxy)hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane, n-butyl-4,4-bis(tert-butylperoxy)valerate, benzoyl peroxide, p-chlorobenzoyl peroxide, 2,4-dichlorobenzoyl peroxide, tert-butylperoxybenzoate, tert-butylperoxyisopropylcarbonate, diacetyl peroxide, lauroyl peroxide, and tert-butylcumyl peroxide.

The organic peroxide according to the present invention may be used singly or in combinations of two or more.

When the organic peroxide according to the present invention is compounded in the halogen-based rubber (A), it is desirable that the organic peroxide is typically used in a range of 0.1 to 5 parts by mass, preferably 0.5 to 5 parts by mass, and more preferably 0.5 to 4 parts by mass with respect to 100 parts by mass of the halogen-based rubber (A). The amount of the organic peroxide compounded falling within the above range is preferable because the resulting laminate has less bloom on its surface, and the layer (1) exhibits excellent crosslinking characteristics.

### <<Carbon black>>

Specific examples of carbon black according to the present invention include various types of carbon black such as SRF, GPF, FEF, MAF, HAF, ISAF, SAF, FT, MT; and a surface-treated carbon black obtained by surface-treating these types of carbon black with a silane coupling agent.

The carbon black according to the present invention is compounded in the halogen-based rubber (A) in an amount of 10 to 300 parts by mass, preferably 10 to 200 parts by mass, and more preferably about 10 to 100 parts by mass with respect to 100 parts by mass of the halogen-based rubber (A).

When the content of carbon black is within the above range, it is preferable because it can provide a laminate having improved mechanical properties such as tensile strength and abrasion resistance and increase the hardness thereof without impairing other physical properties thereof.

### <<Antiaging agent>>

When the halogen-based rubber (A) forming the layer (1) according to the present invention contains an antiaging agent, a product lifetime of the resulting laminate can be prolonged. As the antiaging agent according to the present invention, conventionally known antiaging agents, for example, an amine-based antiaging agent, a phenol-based antiaging agent, and a sulfur-based antiaging agent can be used.

Specific examples of the antiaging agent according to the present invention include aromatic-secondary-amine-based antiaging agents such as phenylbutylamine, N,N-di-2-naphthyl-p-phenylenediamine and 4,4'-bis (α, α-dimethylbenzyl)diphenylamine (also known as 4,4'-dicumyl-diphenylamine); amine-based antiaging agents such as 2,2,4-trimethyl-1,2-dihydroquinoline polymer; phenol-based antiaging agents such as dibutylhydroxytoluene and tetrakis[methylene(3,5-di-t-butyl-4-hydroxy)hydrocinnamate]methane; thioether antiaging agents such as bis[2-methyl-4-(3-n-alkylthiopropionyloxy)-5-t-butylphenyl]sulfide; dithiocarbamate-based antiaging agents such as nickel dibutyldithiocarbamate; zinc salts of 2-mercaptobenzoylimidazole and 2-mercaptobenzoimidazole; and sulfur-based antiaging agents such as dilaurylthiodipropionate and distearylthiodipropionate.

These antiaging agents can be used singly or in combinations of two or more.

When the antiaging agent according to the present invention is compounded in the halogen-based rubber (A), an amount of the antiaging agent compounded is typically 0.5 to 5.0 parts by mass, preferably 0.5 to 4.5 parts by mass, and more preferably 0.5 to 4.0 parts by mass with respect to 100 parts by mass of the halogen-based rubber (A). The amount compounded falling within the above range is preferable because the resulting laminate has excellent heat aging resistance.

### <<Softening agent>>

As the softening agent according to the present invention, agents known as components conventionally compounded in rubbers, such as softening agents and processing aids can be widely used.

Specific examples thereof include: petroleum-based softening agents such as paraffin-based processed oils, naphthene-based processed oils, and aromatic processed oils; softening materials based on synthesized oils; co-oligomer of ethylene and an α-olefin; paraffin wax; liquid paraffin; white oil; petrolatum; softening agents based on coal tar such as coal tar and coal tar pitch; softening agents based on vegetable oils, such as castor oil, cotton oil, linseed oil, canola oil, coconut oil, palm oil, soya oil, groundnut oil, Japan wax, rosin, pine oil, dipentene, pine tar and tall oil; substitutes (factices) such as black substitute, white substitute and candy substitute; waxes such as beeswax, carnauba wax and lanolin; fatty acids, fatty acid salts and esters, such as ricinoleic acid, palmitic acid, stearic acid, linoleic acid, lauric acid, myristic acid, barium stearate, calcium stearate, magnesium stearate, zinc stearate and zinc laurate; ester-based plasticizers such as dioctyl phthalate, dioctyl adipate and dioctyl sebacate; coumarone-indene resin; phenol-formaldehyde resin; terpene-phenol resin; polyterpene resin; and petroleum-based hydrocarbon resins such as synthesized polyterpene resins, aromatic hydrocarbon resins, aliphatic hydrocarbon resins, aliphatic ring hydrocarbon resins, aliphatic/alicyclic petroleum resins, aliphatic/aromatic petroleum resins, hydrogenated modified alicyclic hydrocarbon resins, hydrogenated hydrocarbon resins, liquid polybutene, liquid polybutadiene and atactic polypropylene.

Among them, fatty acids, petroleum-based softening agents, phenol-formaldehyde resin and petroleum-based hydrocarbon resins are preferable; fatty acids, petroleum-based softening agents and petroleum-based hydrocarbon resins are more preferable; and fatty acids and petroleum-based softening agents are particularly preferable.

Among the above petroleum-based softening agents, petroleum-based processed oils are preferable, paraffin-based processed oils, naphthene-based processed oils, aromatic processed oils and the like are more preferable, and paraffin-based processed oils are particularly preferable among them. Among the petroleum-based hydrocarbon resins, aliphatic cyclic hydrocarbon resins are preferable. Among these softening agents, paraffin-based processed oils are particularly preferable.

These softening agents can be used singly or in combinations of two or more.

When the softening agent according to the present invention is compounded in the halogen-based rubber (A), the amount thereof is typically less than 200 parts by mass, preferably 0 to 100 parts by mass, more preferably 0 to 80 parts by mass, still more preferably 0 to 70 parts by mass, and particularly preferably 0 to 60 parts by mass with respect to 100 parts by mass of the halogen-based rubber (A).

### <<Metal oxide>>

The metal oxide according to the present invention can be appropriately selected according to applications of the laminate, and can be used singly or in combinations of two or more. Specific examples of the metal oxide include zinc flower (for example, META-Z102) (trade name: zinc oxide manufactured by Inoue Calcium Corporation or the like) and magnesium oxide.

When the metal oxide according to the present invention is compounded in the halogen-based rubber (A), the amount thereof is typically 0.5 to 20 parts by mass, preferably 0.5 to 15 parts by mass, more preferably 0.5 to 10 parts by mass, and still more preferably 0.5 to 5 parts by mass with respect to 100 parts by mass of the halogen-based rubber (A).

### <<Crosslinking aid>>

Examples of the crosslinking aid according to the present invention include sulfur; quinonedioxime compounds such as p-quinonedioxime; polyfunctional monomers such as (meth)acrylate compounds, such as trimethylolpropane triacrylate and polyethylene glycol dimethacrylate; allyl compounds such as diallylphthalate and triallyl cyanurate; maleimide compounds such as m-phenylene bismaleimide; and divinylbenzene. The crosslinking aid according to the present invention may be used singly or in combinations of two or more.

When the crosslinking aid according to the present invention is compounded in the halogen-based rubber (A), the amount thereof is typically 0 to 4.0 parts by mass, preferably 0 to 3.5 parts by mass, more preferably 0 to 3.0 parts by mass, and still more preferably 0.1 to 3.0 parts by mass with respect to 100 parts by mass of the halogen-based rubber (A). In addition, it is also desirable that the amount of the crosslinking aid compounded is preferably 0.5 to 2 moles, and more preferably an approximately equimolar per mole of the organic peroxide.

### <<Onium salt>>

The layer (1) of the laminate according to the present invention comprises 0.2 parts by mass or more and 10 parts by mass or less of an onium salt that is dialkyl (C₁₄₋₁₈) dimethylammonium chloride. Examples of the onium salts that may additionally be present include quaternary ammonium salts, quaternary phosphonium salts, oxonium salts, sulfonium salts, cyclic amines and monofunctional amine compounds. Among them, quaternary ammonium salts and quaternary phosphonium salts are preferable.

The onium salt that may additionally be present may be used singly or in combinations of two or more.

Examples of the quaternary ammonium salts that may be present in addition to the onium salt that is dialkyl (C₁₄₋₁₈) dimethylammonium chloride are not particularly limited and include dialkyl(C14-18) dimethylammonium chloride, 1,8-diazabicyclo[5,4,0]-7-undecenium salts, 8-methyl-1,8-diazabicyclo[5,4,0]-7-undecenium chloride, 8-methyl-1,8-diazabicyclo[5,4,0]-7-undecenium iodide, 8-methyl-1,8-diazabicyclo[5,4,0]-7-undecenium hydroxide, 8-methyl-1,8-diazabicyclo[5,4,0]-7-undecenium methyl sulfate, 8-ethyl-1,8-diazabicyclo[5,4,0]-7-undecenium bromide, 8-propyl-1,8-diazabicyclo[5,4,0]-7-undecenium bromide, 8-dodecyl-1,8-diazabicyclo[5,4,0]-7-undecenium chloride, 8-dodecyl-1,8-diazabicyclo[5,4,0]-7-undecenium hydroxide, 8-eicosyl-1,8-diazabicyclo[5,4,0]-7-undecenium chloride, 8-tetracosyl-1,8-diazabicyclo[5,4,0]-7-undecenium chloride, 8-benzyl-1,8-diazabicyclo[5,4,0]-7-undecenium chloride (hereinafter referred to as "DBU-B"), 8-benzyl-1,8-diazabicyclo[5,4,0]-7-undecenium hydroxide, 8-phenethyl-1,8-diazabicyclo[5,4,01-7-undecenium chloride, and 8-(3-phenylpropyl)-1,8-diazabicyclo[5,4,0]-7-undecenium chloride. Among them, dialkyl(C14-18) dimethylammonium chloride is preferable.

Examples of the quaternary phosphonium salts are not particularly limited and can include tetrabutyl phosphonium chloride, benzyltriphenylphosphonium chloride (hereinafter referred to as "BTPPC"), benzyltrimethylphosphonium chloride, benzyltributylphosphonium chloride, tributylallyl phosphonium chloride, tributyl-2-methoxypropylphosphonium chloride, and benzylphenyl(dimethylamino)phosphonium chloride. Among them, in terms of vulcanization performance and physical properties of vulcanized products, benzyltriphenylphosphonium chloride (BTPPC) is preferable.

A solid solution of a quaternary ammonium salt, a quaternary phosphonium salt and bisphenol AF and a compound disclosed in JP H11-147891 A can also be used.

In addition, examples of the amine compound include hexamethylenediamine carbamate, N,N'-dicinnamylidene-1,6-hexamethylenediamine, and 4,4'-bis(aminocyclohexyl)methanecarbamate. Among them, N,N'-dicinnamylidene-1,6-hexamethylenediamine is preferable.

As the onium salt according to the present invention, a commercially available product may be used, and "LIPOQUAD 2HT FLAKE" (manufactured by Lion Specialty Chemicals Co., Ltd., dialkyl(C14-18) dimethylammonium chloride) can be used, for example.

The onium salt that is dialkyl (C₁₄₋₁₈) dimethylammonium chloride is present in the halogen-based rubber (A) in an amount of 0.2 parts by mass or more and 10 parts by mass or less. Typically, when an additional onium salt is compounded in the halogen-based rubber (A), the amount thereof is preferably 0.2 parts by mass or more, more preferably 0.2 parts by mass or more and 10 parts by mass or less, and still more preferably 0.5 parts by mass or more and 8 parts by mass or less with respect to 100 parts by mass of the halogen-based rubber (A). When the onium salt according to the present invention is used in the above range and the inorganic compound (B) is used in combination, adhesive strength with the layer (2) is further improved.

### <<Additional components>>

The following additives can be compounded in the halogen-based rubber (A) forming the layer (1) according to the present invention in addition to the above additives.

The additional components according to the present invention include various additive components usually added to rubber compositions such as a filler, a foaming agent, an antioxidant, a processing aid, a surfactant, and a weathering agent. In addition, a resin or rubber component other than the halogen-based rubber (A) may be contained as necessary.

### <Filler>

Examples of the filler according to the present invention include inorganic fillers such as silica, activated calcium carbonate, light calcium carbonate, heavy calcium carbonate, fine powder talc, talc, fine powder silicic acid and clay. The amount of these fillers can be typically 0 to 300 parts by mass and preferably about 0 to 200 parts by mass with respect to 100 parts by mass of the halogen-based rubber (A). By using a filler, a laminate having improved mechanical properties such as tensile strength, tear strength and abrasion resistance can be obtained, and hardness thereof can be increased without impairing other physical properties of the laminate.

### <Antioxidant>

Specific examples of the antioxidant according to the present invention include:
aromatic secondary amine-based stabilizing agents such as phenylnaphthylamine, 4,4'-(α,α-dimethylbenzyl)diphenylamine and N,N'-di-2-naphthyl-p-phenylenediamine;
phenol-based stabilizing agents such as 2,6-di-t-butyl-4-methylphenol and tetrakis-[methylene-3-(3',5'-di-t-butyl-4'-hydroxyphenyl)propionate]methane;
thioether-based stabilizing agents such as bis[2-methyl-4-(3-n-alkylthiopropionyloxy)-5-t-butylphenyl]sulfide; benzimidazole-based stabilizing agents such as 2-mercaptobenzimidazole;
dithiocrabamate-based stabilizing agents such as nickel dibutyldithiocarbamate; and
quinoline-based stabilizing agents such as a polymerized product of 2,2,4-trimethyl-1,2-dihydroquinoline. These may be used singly or in combinations of two or more.

When the antioxidant according to the present invention is compounded in the halogen-based rubber (A), it can be typically used in an amount of, for example, 5 parts by mass or less and preferably 3 parts by mass or less with respect to 100 parts by mass of the halogen-based rubber (A).

### <Surfactant>

Specific examples of the surfactant according to the present invention include amines such as di-n-butylamine, dicyclohexylamine, monoethanolamine, triethanolamine, "ACTING B" (manufactured by YOSHITOMI PHARMACEUTICAL INDUSTRIES, LTD.) and "ACTING SL" (manufactured by YOSHITOMI PHARMACEUTICAL INDUSTRIES, LTD.), polyethylene glycol, diethylene glycol, lecithin, triallyl trimellitate, zinc compounds of aliphatic and aromatic carboxylic acids (examples; "Struktol activator 73", "Struktol IB531" and "Struktol FA541" manufactured by Schill&Seilacher GmbH), "ZEONET ZP" (manufactured by Zeon Corporation), octadecyltrimethylammonium bromide, synthesized hydrotalcite, and special quaternary ammonium compounds (examples; "LIPOQUAD 2HTF"(manufactured by Lion Specialty Chemicals Co., Ltd., dialkyl(C14-18) dimethylammonium chloride). LIPOQUAD 2HTF is the most preferable surfactant.

Typically, when the surfactant according to the present invention is compounded in the halogen-based rubber (A), the amount thereof is, for example, 0.2 to 10 parts by mass, preferably 0.3 to 8 parts by mass, more preferably 0.3 to 7 parts by mass, particularly preferably 0.5 to 7 parts by mass, and most preferably 1 to 6 parts by mass with respect to 100 parts by mass of the halogen-based rubber (A). The surfactant can be appropriately selected depending on its application, and can be used singly or in combinations of two or more.

### <Pseudo-gel inhibitor>

An example of the pseudo-gel inhibitor according to the present invention is "NHM-007" (manufactured by Mitsui Chemicals, Inc.).

When the pseudo-gel inhibitor according to the present invention is compounded in the halogen-based rubber (A), the amount thereof is typically 0.1 to 15 parts by mass, preferably 0.5 to 12 parts by mass, and more preferably 1.0 to 10 parts by mass with respect to 100 parts by mass of the halogen-based rubber (A).

Other additives may be further compounded in the halogen-based rubber (A) forming the layer (1) according to the present invention as necessary. Examples of the other additives include heat stabilizers, weathering stabilizers, antistatic agents, colorants, lubricants and thickeners.

### <Halogen-containing polymer (C)>

The halogen-containing polymer (C) forming the layer (2) of the laminate of the present invention is a polymer excluding the above-mentioned halogen-based rubber (A) forming the layer (1).

The halogen-containing polymer (C) according to the present invention is a polymer including a halogen atom in its molecule and is a polymer having a structural unit derived from a halogen-containing monomer.

The halogen-containing polymer (C) according to the present invention is preferably a fluorine atom-containing polymer and further preferably a fluorine-based rubber.

A fluorine-based rubber is preferably used as the halogen-containing polymer (C) forming the layer (2), because a laminate excellent in thermal resistance and oil resistance may be obtained.

### <<Fluorine-based rubber>>

Examples of the fluorine-based rubber according to the present invention include vinylidene fluoride (VdF)/perhalo-olefin-based elastomers such as a VdF/hexafluoropropylene (HFP) copolymer, a VdF/tetrafluoroethylene (TFE)/HFP copolymer and a VdF/TFE/perfluoro(alkylvinyl ether) (PAVE) copolymer; VdF/non-perhalo-olefin-based elastomers such as a TFE/propylene/VdF copolymer and an HFP/ethylene/VdF copolymer and non-perfluoro elastomers such as a TFE/propylene copolymer and an HFP/ethylene copolymer.

Further, it is preferable that the molecular weight of fluorine-based rubber is from 20,000 to 300,000 and preferably from 50,000 to 200,000 in terms of the number average molecular weight.

In terms of thermal resistance, oil resistance and chemical resistance, elastomers of a VdF/HFP copolymer, a VdF/TFE/HFP copolymer, a VdF/TFE/PAVE copolymer, a TFE/propylene/VdF copolymer, an HFP/ethylene/VdF copolymer, a TFE/propylene copolymer and an HFP/ethylene copolymer are preferable, and elastomers of a VdF/HFP copolymer and a VdF/TFE/HFP copolymer are used in the present invention.

In the fluorine-based rubber according to the present invention, as a unit containing a crosslinkable group, a polyfunctional monomer having a plurality of vinyl groups or allyl groups or an iodine- or bromine-containing monomer may be copolymerized. In addition, double bonds, which serve as crosslinkable sites, may be caused to be generated in its molecule by performing heat treatment or the like to promotedehydrofluorination. A fluorine-based rubber which is obtained by using an olefin iodide or an olefin bromide and which has a structural unit derived from the olefin iodide or a structural unit derived from the olefin bromide as a crosslinkable unit is particularly preferable.

In addition, a content of crosslinkable sites (for example, a content of structural units derived from an olefin bromide when an olefin bromide is used as a crosslinkable unit) in the fluorine-based rubber is preferably 0.05 to 5 mol%, more preferably 0.15 to 3 mol%, and particularly preferably 0.25 to 2 mol%. When a content of the crosslinkable sites is less than the above range, sealing performance or adhesive strength may become insufficient, and when the content of the crosslinkable sites exceeds the above range, rubber elasticity may be lost because of reduction in elongation or flexibility, for example.

### <Polyol-based crosslinking agent>

The halogen-containing polymer (C) forming the layer (2) according to the present invention is combined with a polyol-based crosslinking agent.

Bisphenols are preferable as the polyol-based crosslinking agent according to the present invention. Specific examples thereof include polyhydroxyaromatic compounds such as 2,2'-bis(4-hydroxyphenyl) propane [bisphenol A], 2,2-bis(4-hydroxyphenyl) hexafluoropropane [bisphenol AF], bis(4-hydroxyphenyl)sulfone [bisphenol S], bisphenol A bis(diphenyl phosphate), 4,4'-dihydroxydiphenyl, 4,4'-dihydroxydiphenyl methane, and 2,2-bis(4-hydroxyphenyl)butane [bisphenol B].

Bisphenol A and bisphenol AF are preferably used as the polyol-based crosslinking agent according to the present invention. In addition, an alkali metal salt or an alkaline-earth metal salt of the above-described polyhydroxyaromatic compounds may also be used as a polyol-based crosslinking agent.

In addition, a commercially available master batch including a starting material rubber and a polyol-based crosslinking agent may also be used as a polyol-based crosslinking agent. Examples of the commercially available master batch include Curative VC#30 (manufactured by DuPont Dow Elastomers L.L.C.: containing 50 wt% of a crosslinking agent [bisphenol AF]).

The crosslinking agent according to the present invention may be used singly or in combinations of two or more.

When the polyol-based crosslinking agent is combined with the halogen-containing polymer (C) forming the layer (2) according to the present invention, the polyol-based crosslinking agent is desirably used in a range of 0.5 to 10 parts by mass, preferably 1.0 to 8.0 parts by mass, and still more preferably 1.5 to 6.0 parts by mass with respect to 100 parts by mass of the halogen-containing polymer (C).

When the halogen-containing polymer (C) forming the layer (2) includes the polyol-based crosslinking agent, a laminate having better peel strength with the layer (1) may be obtained.

The layer (2) according to the present invention may be formed by using a commercially available composition including a fluorine-based rubber, which is a halogen-containing polymer, and the polyol-based crosslinking agent. Examples of the commercially available composition including a fluorine-based rubber and a polyol-based crosslinking agent include DAI-EL DC-2270F and DAI-EL DC-4070 (both are manufactured by Daikin Industries, Ltd.). DAI-EL DC-2270F is a composition including a polyol-based crosslinking agent, a filler and an acid acceptor in addition to a fluorine-based rubber, and DAI-EL DC-4070 is a composition including an organic peroxide and a filler in addition to a fluorine-based rubber.

In addition, as in the halogen-based rubber (A), various additives usually compounded in rubber can be added to the halogen-containing polymer (C) forming the layer (2) according to the present invention in the amounts above-described.

In the halogen-containing polymer (C) forming the layer (2) according to the present invention, an inorganic filler including: metallic hydroxides such as magnesium hydroxide, aluminum hydroxide and calcium hydroxide; carbonates such as magnesium carbonate, aluminum carbonate, calcium carbonate and barium carbonate; silicates such as magnesium silicate, calcium silicate, sodium silicate and aluminum silicate; sulfates such as aluminum sulfate, calcium sulfate and barium sulfate; metallic sulfides such as synthetic hydrotalcite, molybdenum disulfide, iron sulfide and copper sulfide; silicon oxides such as wet silica, dry silica, fine quartz powder and glass fibers; diatomaceous earth; asbestos; lithopone (zinc sulfide/barium sulfide); graphite; carbon black; carbon fluoride; calcium fluoride; coke; talc; mica powder; wollastonite; carbon fibers; aramid fibers and various whiskers, as well as an organic stiffener, an organic filler or the like may be used as a filler.

In addition, an acid acceptor, an ultraviolet absorber, a flame retardant, an oil resistance improver, an antiscorching agent, a tackifier and the like can be optionally compounded in the halogen-containing polymer as additional components.

### <Laminate>

The laminate of the present invention is a laminate including the layers (1) and (2) directly bonded to each other.

The thicknesses of the layer (1) and the layer (2) constituting the laminate of the present invention are not particularly limited, and the thickness of the layer (1) is typically 1 to 30 mm and preferably 1 to 5 mm, and the thickness of the layer (2) is typically 1 to 30 mm and preferably 1 to 5 mm. In addition, the total thickness of the laminate is not particularly limited, and it is typically 5 to 31 mm and preferably 5 to 20 mm.

As long as the laminate of the present invention has a layer including the layers (1) and (2) directly bonded to each other, configuration of the laminate is not particularly limited to one having said layer only, and another layer may be laminated on the outer side of the layer (1) (the face on which the layer (2) is not bonded) or on the outer side of the layer (2) (the face on which the layer (1) is not bonded).

### <Method of producing laminate>

A method of producing the laminate of the present invention is not particularly limited, and examples of the method include the following methods (a) to (c) for obtaining a laminate. Incidentally, after a laminate has been obtained by any of the methods (a) to (c), a crosslinking step may be performed. Alternatively, a secondary vulcanization step may be performed in an oven or the like after primary vulcanization to give a laminate having a layer including a crosslinked polymer or rubber.

(a) A method of obtaining a laminate including the layers (1) and (2) directly bonded to each other, including: separately kneading materials constituting the layer (1) and materials constituting the layer (2) by a mixer such as a kneader, a roll, a Banbury mixer or an internal mixer; and simultaneously extruding the respective kneaded materials by an extruder.
(b) A method of directly bonding the layer (1) and the layer (2) to each other, including: kneading materials constituting the layer (1) by a mixer such as a kneader, a roll, a Banbury mixer or an internal mixer and extruding the kneaded materials by an extruder to form the layer (1); and kneading materials constituting the layer (2) by a mixer such as a kneader, a roll, a Banbury mixer or an internal mixer and extruding the kneaded materials above the layer (1) by an extruder.
(c) A method of directly bonding the layer (1) and the layer (2) to each other, including: kneading materials constituting the layer (2) by a mixer such as a kneader, a roll, a Banbury mixer or an internal mixer and extruding the kneaded materials by an extruder to form the layer (2); and kneading materials constituting the layer (1) by a mixer such as a kneader, a roll, a Banbury mixer or an internal mixer and extruding the kneaded materials above the layer (2) by an extruder.

Incidentally, in producing a laminate, it is preferable to form a laminate including the layers (1) and (2) directly bonded to each other, by press-shaping in view of improving peel strength between the layer (1) and the layer (2).

### (Crosslinking step, primary vulcanization)

Examples of the crosslinking step or primary vulcanization include a step of preliminarily compounding components necessary for crosslinking such as a crosslinking agent in materials constituting the layer (1) or the layer (2) and causing crosslinking by heating (for example, 150°C to 240°C), and a step of irradiating a laminate with an electron beam (for example, an electron beam having an energy of 0.1 to 10 MeV) to cause crosslinking. Incidentally, irradiation with the electron beam is carried out so that the dose absorbed by the laminate becomes typically 0.5 to 36 Mrads, preferably 0.5 to 20 Mrads, and more preferably 1 to 10 Mrads.

Incidentally, when crosslinking is caused by heating during the crosslinking step or primary vulcanization, it is preferable to carry out heating while performing press-shaping in view of improving peel strength between the layer (1) and the layer (2).

### (Secondary vulcanization)

Secondary vulcanization is a step carried out after the primary vulcanization and is a step for sufficiently promoting vulcanization (crosslinking) by heating (for example, 150°C to 200°C).

### <Application>

The laminate of the present invention can be used for various applications. The laminate of the present invention can be used as members for automobiles, motorbikes, industrial machinery, construction machinery or agricultural machinery, for example. Specific examples of the members include rolls for industrial use, packings (for example, capacitor packings), gaskets, belts (for example, heat-insulating belts, belts for copying machines and conveyance belts), hoses such as hoses for automobiles (for examples, turbocharger hoses, water hoses, brake reservoir hoses, radiator hoses and air hoses), anti-vibration rubbers, anti-vibration materials or vibration-controlling materials (for example, engine mount and motor mount), muffler hangers, cables (ignition cables, cabtire cables and high tension cables), wire covering materials (high voltage wire covering materials, low voltage wire covering materials and wire covering materials for vessels), glass run channels, colored skin materials, paper-feeding rolls, and roofing sheets.

Among them, the laminate of the present invention is suitably used for automotive interior and exterior parts and for applications requiring heat resistance. An application example of the laminate is a hose including the laminate of the present invention as at least a part thereof. While applications of the hose are not particularly limited, the hose is preferably used in any of applications for an automobile, a motorbike, industrial machinery, construction machinery and agricultural machinery. More specifically, examples of the hose include a turbocharger hose, a brake reservoir hose and a radiator hose, and the hose is particularly preferably used for a turbocharger hose for an automobile.

The hose of the present invention may have the laminate of the present invention as at least a part thereof, and it may be a hose formed only of the laminate of the present invention.

The laminate of the present invention is suitable as a turbocharger hose.

A method of producing the turbocharger hose of the present invention is not particularly limited, and examples thereof include a method of shaping an uncured turbocharger hose (laminate) having a layered structure by extrusion molding, coextrusion molding, winding of a sheet material or a combination thereof followed by heating using a steamer or the like to give a turbocharger hose (laminate). The uncured turbocharger hose preferably has high capability of retaining its shape without shrinking or deformation.

### EXAMPLES

Next, the present invention will be described in more detail by showing Examples. However, the present invention is not limited by these Examples.

### (Measurement and evaluation method)

Measurement and evaluation methods of respective characteristics in following Production Examples, Examples and Comparative Examples are as follows.

### (T-peel test)

Peel strength of laminates was measured by the following method.

T-peel test was conducted on the laminates obtained in Examples and Comparative Examples with a measurement temperature: 23.0°C; test speed: 200.0 mm/min; and test piece width: 25.0 mm to determine peel strength.

Halogen-based rubbers (A) and the like used in Examples and Comparative Examples of the present invention are shown below.

### <<Halogen-based rubber (A)>>

### <Acrylic Rubber (ACM)>

Nipol AR-12: an acrylic rubber having a skeleton composed mainly of acrylic acid esters, manufactured by Zeon Corporation

### <Epichlorohydrin rubber (ECO)>

EPICHLOMER H: an epichlorohydrin rubber, manufactured by OSAKA SODA CO., LTD.

### <<Halogen-containing polymer (C)>>

### <Fluorine-based rubber>

DAI-EL DC-2270F: full-compounded, binary polyol vulcanization type, specific gravity: 1.85, ML(1+10)100°C: about 115, manufactured by Daikin Industries, Ltd.

Incidentally, DAI-EL DC-2270F is also referred to as "polyol-based FKM."

### [Comparative Example 1]

### <<Preparation of ACM composition forming layer (1)>>

As a first stage, 100 parts by mass of ACM was roughly kneaded for 30 seconds by using a Banbury mixer, Model BB-2 (manufactured by KOBE STEEL, LTD.), and 60 parts by mass of HAF carbon black (Asahi #70G, manufactured by Asahi Carbon Co., Ltd.), 1 part by mass of stearic acid, and 2 parts by mass of 4,4'-bis(α,α-dimethylbenzyl)diphenylamine (NOCRAC CD manufactured by OUCHI SHINKO CHEMICAL INDUSTRIAL CO., LTD.) were subsequently added thereto, followed by kneading at 140°C for two minutes. Then, the ram of the mixer was raised to be cleaned, additional kneading was carried out for one minute, and the kneaded product was discharged at about 150°C, to provide a compound of the first stage.

Next, as a second stage, the compound obtained in the first stage was wound around an 8-inch roll (manufactured by Nippon Roll MFG. Co., Ltd., with a surface temperature of a front roll being 50°C, a surface temperature of a back roll being 50°C, a rotational rate of the front roll being 16 rpm, and a rotational rate of the back roll being 18 rpm), and 20 parts by mass of hydrotalcite (DHT-4A, manufactured by Kyowa Chemical Industry Co., Ltd.), 1 part by mass of polyoxyethylene stearyl ether phosphate (PHOSPHANOL RL-210: manufactured by TOHO Chemical Industry Co., Ltd.), 0.5 parts by mass of (6-aminohexyl)carbamic acid (Diak No. 1: manufactured by DuPont), 2 parts by mass of 1,3-di-o-tolylguanidine (NOCCELER-DT, manufactured by OUCHI SHINKO CHEMICAL INDUSTRIAL CO., LTD) were added to the compound, followed by kneading for ten minutes, to provide an uncrosslinked rubber composition (rubber compound) (composition including ACM).

### <<Preparation of fluorine-based rubber composition forming layer (2)>>

### (Fluorine-based rubber composition)

DAI-EL DC-2270F (manufactured by Daikin Industries, Ltd.: polyol crosslinking-type fluorine-based rubber compound) was used as a fluorine-based rubber composition. DAI-EL DC-2270F is a composition including a polyol-based crosslinking agent (bisphenol AF), a crosslinking enhancer (quaternary onium salt), a filler and an acid acceptor in addition to the fluorine-based rubber.

### <<Preparation and evaluation of laminate>>

### (Preparation of laminate for T-peel test)

Each of the composition including ACM and the fluorine-based rubber composition described above was sheeted into a sheet-like shape. Next, each of the sheeted unvulcanized rubber sheets (the composition including ACM and the fluorine-based rubber composition) of 50 g was separately sandwiched between two pieces of Lumirror (stretched polyester (polyethylene terephthalate) film) from upside and downside. Each unvulcanized rubber sheet sandwiched between two pieces of Lumirror from upside and downside was pressed at 120°C for two minutes using a 50-ton press-shaping machine, to give a unvulcanized rubber sheet in a 20 cm square with t (thickness) = 1 mm.

Next, the unvulcanized rubber sheet obtained from the composition including ACM [layer (1)] and the unvulcanized rubber sheet obtained from the fluorine-based rubber composition [layer (2)] after being pressed were each cut into the press size described below (15 cm × 15 cm × t = 1 mm). After being cut, the upper-side and lower-side pieces of Lumirror were removed, and then the unvulcanized rubber sheets were superposed on each other. In superposing, the unvulcanized rubber sheets were superposed on each other in a state where a Teflon (registered trademark) resin sheet (t = 0.2 mm) is sandwiched between a part (width of 3 cm, length of 15 cm: grasping margin for peel test) of the unvulcanized rubber sheets.

The superposed unvulcanized rubber sheets with the Teflon (registered trademark) resin sheet sandwiched therebetween at said part were pressed (main press) at 180°C for ten minutes using a 100-ton press-shaping machine, to provide a crosslinked rubber sheet (laminate) of 2 mm in thickness.

The Teflon (registered trademark) resin sheet was removed from the crosslinked rubber sheet (laminate), and T-peel test was conducted on the crosslinked rubber sheet (laminate) according to the above described method.

The result is shown in Table 1.

### [Comparative Example 2, Examples 1 to 6 and Reference Example 1]

Laminates were prepared in the same manner as in Comparative Example 1 except that ACM compositions obtained by adding respective compounding agents with the amounts compounded described in Table 1 were used instead of the ACM composition forming the layer (1) used in Comparative Example 1, and T-peel tests were conducted thereon using the method described in Comparative Example 1.

The results are shown in Table 1-1 and Table 1-2.

### [Comparative Example 3]

A laminate was prepared in the same manner as in Comparative Example 1 except that the amounts compounded described in Table 1-2 (no inorganic compound (B) such as hydrotalcite was compounded) were used instead of the ACM composition forming the layer (1) used in Comparative Example 1, and T-peel test was conducted thereon using the method described in Comparative Example 1.

The result is shown in Table 1-2.

### [Reference Example 2]

A laminate was prepared in the same manner as in Comparative Example 1 except that the amounts compounded described in Table 1-2 (no inorganic compound (B) such as hydrotalcite was compounded) were used instead of the ACM composition forming the layer (1) used in Comparative Example 1, and T-peel test was conducted thereon using the method described in Comparative Example 1.

The result is shown in Table 1-2.

**[Table 1-1]**

| | | Comparative Example 1 | Comparative Example 2 | Example 1 | Example 2 | Reference Example 1 |
|---|---|---|---|---|---|---|
| First Stage | <Formulation> [phr] | | | | | |
| | Nipol AR12 | 100 | 100 | 100 | 100 | 100 |
| | Stearic Acid | 1 | 1 | 1 | 1 | 1 |
| | Asahi #70 | 60 | 60 | 60 | 60 | 60 |
| | NOCRAC CD | 2 | 2 | 2 | 2 | 2 |
| Second Stage | LIPOQUAD 2HT FLAKE | | | 3 | 3 | |
| | DHT-4A | 20 | | 20 | | 5 |
| | Kyowamag 150 | | 20 | | 20 | |
| | PHOSPHANOL RL-210 | 1 | 1 | 1 | 1 | 1 |
| | Diak No.1 | 0.5 | 0.5 | 0.5 | 0.5 | 0.5 |
| | NOCCELER-DT | 2 | 2 | 2 | 2 | 2 |
| Total [phr] | | 186.5 | 186.5 | 189.5 | 189.5 | 171.5 |
| Peel Strength with Layer (2) [N/cm] | | 11.4 | 13.3 | 17.4 | 14 | 11.4 |

### [Table 1-2]

**Table 1-2**

| | | Example 3 | Example 4 | Example 5 | Example 6 | Comparative Example 3 | Reference Example 2 |
|---|---|---|---|---|---|---|---|
| First Stage | <Formulation> [phr] | | | | | | |
| | Nipol AR12 | 100 | 100 | 100 | 100 | 100 | 100 |
| | Stearic Acid | 1 | 1 | 1 | 1 | 1 | 1 |
| | Asahi #70 | 60 | 60 | 60 | 60 | 60 | 60 |
| | NOCRAC CD | 2 | 2 | 2 | 2 | 2 | 2 |
| Second Stage | LIPOQUAD 2HT FLAKE | 3 | 3 | 3 | 3 | | 3 |
| | DHT-4A | 5 | 10 | | | | |
| | Kyowamag 150 | | | 5 | 10 | | |
| | PHOSPHANOL RL-210 | 1 | 1 | 1 | 1 | 1 | 1 |
| | Diak No.1 | 0.5 | 0.5 | 0.5 | 0.5 | 0.5 | 0.5 |
| | NOCCELER-DT | 2 | 2 | 2 | 2 | 2 | 2 |
| Total [phr] | | 174.5 | 179.5 | 174.5 | 179.5 | 166.5 | 169.5 |
| Peel Strength with Layer (2) [N/cm] | | 17.7 | 18.4 | 20.8 | 18.6 | Not Adhered | Not Adhered |

### [Reference Example 3]

A laminate was prepared in the same manner as in Comparative Example 1 except that a layer (1) of a composition including an ECO prepared by the following method was used instead of the ACM composition forming the layer (1) used in Comparative Example 1, and T-peel test was conducted thereon using the method described in Comparative Example 1.

The result is shown in Table 2.

### <<Preparation of ECO composition forming layer (1)>>

As a first stage, 100 parts by mass of ECO was roughly kneaded for 30 seconds by using a Banbury mixer, Model BB-2 (manufactured by KOBE STEEL, LTD.), and 40 parts by mass of MAF carbon black (SEAST 116, manufactured by TOKAI CARBON CO., LTD.), 1 part by mass of stearic acid (STEARIC ACID CAMELLIA, manufactured by NOF CORPORATION), 3 parts by mass of magnesium oxide (Kyowamag 150: manufactured by Kyowa Chemical Industry Co., Ltd.), 1 part by mass of nickel dibutyldithiocarbamate (NOCRAC NBC: manufactured by OUCHI SHINKO CHEMICAL INDUSTRIAL CO., LTD.), 5 parts by mass of calcium carbonate (WHITON SB (red): manufactured by Bihoku Funka Kogyo Co., Ltd.) were subsequently added thereto, followed by kneading at 140°C for two minutes. Then, the ram of the mixer was raised to be cleaned, additional kneading was carried out for one minute, and the kneaded product was discharged at about 150°C, to provide a compound of the first stage.

Next, as a second stage, the compound obtained in the first stage was wound around an 8-inch roll (manufactured by Nippon Roll MFG. Co., Ltd., with a surface temperature of a front roll being 50°C, a surface temperature of a back roll being 50°C, a rotational rate of the front roll being 16 rpm, and a rotational rate of the back roll being 18 rpm), and 20 parts by mass of hydrotalcite (DHT-4A, manufactured by Kyowa Chemical Industry Co., Ltd.), 1.2 parts by mass of 2,4,6-trimercapto-s-triazine (NOCCELER-TCA: manufactured by OUCHI SHINKO CHEMICAL INDUSTRIAL CO., LTD.) and 0.5 parts by mass of tetramethylthiuram disulfide (NOCCELER-TT: manufactured by OUCHI SHINKO CHEMICAL INDUSTRIAL CO., LTD.) were added to the compound, followed by kneading for ten minutes, to provide an uncrosslinked rubber composition (rubber compound) (composition including ECO).

### [Examples 7 to 10]

Laminates were prepared in the same manner as in Comparative Example 1 except that ECO compositions obtained by adding respective compounding agents with the amounts compounded described in Table 2 were used instead of the ECO composition forming the layer (1) used in Reference Example 3, and T-peel test was conducted thereon using the method described in Reference Example 3.

The result is shown in Table 2.

### [Comparative Example 4]

A laminate was prepared in the same manner as in Reference Example 1 except that the amounts compounded described in Table 2 (no inorganic compound (B) such as hydrotalcite was compounded) were used instead of the ECO composition forming the layer (1) used in Reference Example 3, and T-peel test was conducted thereon using the method described in Reference Example 3.

The result is shown in Table 2.

### [Reference Example 4]

A laminate was prepared in the same manner as in Reference Example 1 except that the amounts compounded described in Table 2 (no inorganic compound (B) such as hydrotalcite was compounded) were used instead of the ECO composition forming the layer (1) used in Reference Example 3, and T-peel test was conducted thereon using the method described in Reference Example 3.

The result is shown in Table 2.

**[Table 2]**

| | | Reference Example 3 | Example 7 | Example 8 | Example 9 | Example 10 | Comparative Example 4 | Reference Example 4 |
|---|---|---|---|---|---|---|---|---|
| First Stage | <Formulation> [phr] | | | | | | | |
| | EPICHLOMER H | 100 | 100 | 100 | 100 | 100 | 100 | 100 |
| | Stearic Acid | 1 | 1 | 1 | 1 | 1 | 1 | 1 |
| | SEAST 116 | 40 | 40 | 40 | 40 | 40 | 40 | 40 |
| | Kyowamag 150 | 3 | 3 | 3 | 3 | 3 | 3 | 3 |
| Second Stage\| | LIPOQUAD 2HT FLAKE | | 3 | 3 | 3 | 3 | | 3 |
| | DHT-4A | 20 | 5 | 10 | 20 | | | |
| | Kyowamag 150 | | | | | 20 | | |
| | NOCRAC NBC | 1 | 1 | 1 | 1 | 1 | 1 | 1 |
| | WHITON SB Red | 5 | 5 | 5 | 5 | 5 | 5 | 5 |
| | NOCCELER-TCA | 1.2 | 1.2 | 1.2 | 1.2 | 1.2 | 1.2 | 1.2 |
| | NOCCELER-TT | 0.5 | 0.5 | 0.5 | 0.5 | 0.5 | 0.5 | 0.5 |
| Total [phr] | | 171.7 | 159.7 | 164.7 | 174.7 | 174.7 | 151.7 | 154.7 |
| Peel Strength with Layer (2) [N/cm] | | 11.4 | 21.4 | 19.3 | 20.3 | 6.2 | 2.9 | 3.3 |

### <Reference Production Example 1 of laminated hose>

A laminated hose was extruded on a die for double-layer molding at an extrusion speed of 2 m/min. to 5 m/min. using two extruders with a temperature of extrusion heads = 80°C so that a thickness of an inner layer (fluorine-based rubber composition of Comparative Example 1) = 1 mm, a thickness of an outer layer (ACM composition of Comparative Example 1) = 2 mm, an inner diameter of the hose = 10 mm, an outer diameter of the hose = 16 mm. After that, the laminated hose was heated with steam-vulcanization (150°C to 160°C, 30 minutes to 50 minutes) to cause crosslinking, and it was confirmed that the appearance of the hose was flat and smooth and that the inner layer and the outer layer thereof were firmly bonded to each other.

### <Production Example 1 of laminated hose>

A laminated hose of a fluorine-based rubber and each of the ACM compositions described in Examples 1 and 2 or an ECO composition was similarly formed, and it was confirmed that the appearance of each hose was flat and smooth and that the inner layer and the outer layer thereof were firmly bonded to each other.

## Claims

1. A laminate comprising the following layers (1) and (2) directly bonded to each other:
layer (1): a layer of a composition comprising
100 parts by mass of a halogen-based rubber (A) that is one or more selected from an epichlorohydrin rubber (ECO) and an acrylic rubber (ACM),
1 to 30 parts by mass of an inorganic compound (B) containing at least one element selected from Group 2 elements and Group 13 elements, and an oxygen atom,
10 to 300 parts by mass of carbon black, and
0.2 parts by mass or more and 10 parts by mass or less of an onium salt that is dialkyl (C₁₄₋₁₈) dimethylammonium chloride; and
layer (2): a layer of a halogen-containing polymer (C) (excluding the halogen-based rubber of the layer (1)),
wherein the halogen-containing polymer (C) is a fluorine-based rubber selected from the group consisting of elastomers of a vinylidene fluoride (VdF)/hexafluoropropylene (HFP) copolymer, a VdF/tetrafluoroethylene (TFE)/HFP copolymer, a VdF/TFE/perfluoro(alkylvinyl ether) (PAVE) copolymer, a TFE/propylene/VdF copolymer, an HFP/ethylene/VdF copolymer, a TFE/propylene copolymer and an HFP/ethylene copolymer, and
contains a polyol-based crosslinking agent.

2. The laminate according to claim 1, wherein the inorganic compound (B) is a compound including one or more elements selected from magnesium, calcium, barium and aluminum.

3. The laminate according to claim 1, wherein the inorganic compound (B) is one or more compounds selected from magnesium oxide and hydrotalcite.

4. A hose comprising the laminate according to any one of claims 1 to 3 as at least a part thereof.

5. The hose according to claim 4, which is used in any of applications for an automobile, a motorbike, industrial machinery, construction machinery and agricultural machinery.

6. The hose according to claim 4, which is used for a turbocharger hose for an automobile.

7. A method of producing a laminate, comprising directly bonding a layer (1) and a layer (2), wherein
the layer (1) is a layer of a composition comprising
100 parts by mass of a halogen-based rubber (A) that is one or more selected from an epichlorohydrin rubber (ECO) and an acrylic rubber (ACM),
1 to 30 parts by mass of an inorganic compound (B) containing at least one element selected from Group 2 elements and Group 13 elements, and an oxygen atom,
10 to 300 parts by mass of carbon black, and
0.2 parts by mass or more and 10 parts by mass or less of an onium salt that is dialkyl (C₁₄₋₁₈) dimethylammonium chloride; and
the layer (2) is a layer of a halogen-containing polymer (C) (excluding the halogen-based rubber of the layer (1)),
wherein the halogen-containing polymer (C) is a fluorine-based rubber selected from the group consisting of elastomers of a vinylidene fluoride (VdF)/hexafluoropropylene (HFP) copolymer, a VdF/tetrafluoroethylene (TFE)/HFP copolymer, a VdF/TFE/perfluoro(alkylvinyl ether) (PAVE) copolymer, a TFE/propylene/VdF copolymer, an HFP/ethylene/VdF copolymer, a TFE/propylene copolymer and an HFP/ethylene copolymer, and
contains a polyol-based crosslinking agent.

## Patentansprüche

1. Laminat, das aus den folgenden Schichten (1) und (2) besteht, die direkt miteinander verbunden sind:
Schicht (1): eine Schicht einer Zusammensetzung, die umfasst:
100 Masseteile eines halogenhaltigen Kautschuks (A), der aus einem Epichlorhydrin-Kautschuk (ECO) und einem Acrylkautschuk (ACM) ausgewählt ist,
1 bis 30 Masseteile einer anorganischen Verbindung (B), die mindestens ein Element aus der Gruppe 2 und der Gruppe 13 sowie ein Sauerstoffatom enthält,
10 bis 300 Masseteile Ruß und
0,2 Masseteile oder mehr und 10 Masseteile oder weniger eines Oniumsalzes, bei dem es sich um Dialkyl(C₁₄₋₁₈)-dimethylammoniumchlorid handelt; und
Schicht (2): eine Schicht aus einem halogenhaltigen Polymer (C) (mit Ausnahme des halogenbasierten Kautschuks der Schicht (1)),
wobei das halogenhaltige Polymer (C) ein fluorbasierter Kautschuk ist, ausgewählt aus der Gruppe bestehend aus Elastomeren eines Vinylidenfluorid-(VdF)/Hexafluorpropylen- (HFP) Copolymers, eines VdF/Tetrafluorethylen- (TFE)/HFP-Copolymers, eines VdF/TFE/Perfluor- (Alkylvinylether) (PAVE)-Copolymers, eines TFE/Propylen/VdF-Copolymers, eines HFP/Ethylen/VdF-Copolymers, eines TFE/Propylen-Copolymers und eines HFP/Ethylen-Copolymers, und
ein Vernetzwerkungsmittel auf Polyolbasis enthält.

2. Laminat nach Anspruch 1, wobei die anorganische Verbindung (B) eine Verbindung ist, die ein oder mehrere Elemente enthält, die aus Magnesium, Calcium, Barium und Aluminium ausgewählt sind.

3. Laminat nach Anspruch 1, wobei die anorganische Verbindung (B) eine oder mehrere Verbindungen ist, die aus Magnesiumoxid und Hydrotalcit ausgewählt sind.

4. Schlauch, der das Laminat nach Anspruch 1 bis 3 als mindestens einen Teil davon umfasst.

5. Schlauch nach Anspruch 4, der in einer beliebigen Anwendung für ein Kraftfahrzeug, ein Motorrad, Industriemaschinen, Baumaschinen und Landmaschinen verwendet wird.

6. Schlauch nach Anspruch 4, der als Turboladerschlauch für ein Kraftfahrzeug verwendet wird.

7. Verfahren zur Herstellung eines Laminats, das das direkte Verbinden einer Schicht (1) und einer Schicht (2) umfasst, wobei
die Schicht (1) eine Schicht einer Zusammensetzung ist, die umfasst:
100 Masseteile eines halogenhaltigen Kautschuks (A), der aus einem Epichlorhydrin-Kautschuk (ECO) und einem Acrylkautschuk (ACM) ausgewählt ist,
1 bis 30 Masseteile einer anorganischen Verbindung (B), die mindestens ein Element aus der Gruppe 2 und der Gruppe 13 sowie ein Sauerstoffatom enthält,
10 bis 300 Masseteile Ruß und
0,2 Masseteile oder mehr und 10 Masseteile oder weniger eines Oniumsalzes, bei dem es sich um Dialkyl(C₁₄₋₁₈)-dimethylammoniumchlorid handelt; und
die Schicht (2) eine Schicht eines halogenhaltigen Polymers (C) (mit Ausnahme des halogenbasierten Kautschuks der Schicht (1)) ist,
wobei das halogenhaltige Polymer (C) ein fluorbasierter Kautschuk ist, ausgewählt aus der Gruppe bestehend aus Elastomeren eines Vinylidenfluorid-(VdF)/Hexafluorpropylen- (HFP) Copolymers, eines VdF/Tetrafluorethylen- (TFE)/HFP-Copolymers, eines VdF/TFE/Perfluor- (Alkylvinylether) (PAVE)-Copolymers, eines TFE/Propylen/VdF-Copolymers, eines HFP/Ethylen/VdF-Copolymers, eines TFE/Propylen-Copolymers und eines HFP/Ethylen-Copolymers, und
ein Vernetzwerkungsmittel auf Polyolbasis enthält.

## Revendications

1. Stratifié comprenant les couches (1) et (2) suivantes, directement liées l'une à l'autre :
couche (1) : une couche dont la composition comprend
100 parties en masse d'un caoutchouc à base d'halogène (A) consistant en un ou plusieurs composés sélectionnés parmi un caoutchouc d'épichlorhydrine (ECO) et un caoutchouc acrylique (ACM),
1 à 30 parties en masse d'un composé inorganique (B) contenant au moins un élément choisi parmi les éléments du groupe 2 et du groupe 13, ainsi qu'un atome d'oxygène,
10 à 300 parties en masse de noir de carbone, et
au moins 0,2 partie en masse et au plus 10 parties en masse d'un sel d'onium consistant en le chlorure de dialkyl(C₁₄₋₁₈)diméthylammonium, et
couche (2) : une couche d'un polymère halogéné (C) (à l'exclusion du caoutchouc à base d'halogène de la couche (1)) ;
le polymère halogéné (C) étant un caoutchouc à base de fluor sélectionné dans le groupe constitué par les élastomères d'un copolymère de fluorure de vinylidène (VdF)/hexafluoropropylène (HFP), d'un copolymère de VdF/tétrafluoroéthylène (TFE)/HFP, d'un copolymère de VdF/TFE/perfluoro(éther alkylvinylique) (PAVE), d'un copolymère de TFE/propylène/VdF, d'un copolymère d'HFP/éthylène/VdF, d'un copolymère de TFE/propylène et d'un copolymère d'HFP/éthylène, et
contenant un agent de réticulation à base de polyol.

2. Stratifié selon la revendication 1, dans lequel le composé inorganique (B) est un composé comprenant un ou plusieurs éléments choisis parmi le magnésium, le calcium, le baryum et l'aluminium.

3. Stratifié selon la revendication 1, dans lequel le composé inorganique (B) consiste en un ou plusieurs composés choisis parmi l'oxyde de magnésium et l'hydrotalcite.

4. Tuyau comprenant le stratifié selon l'une quelconque des revendications 1 à 3 qui en constitue au moins une partie.

5. Tuyau selon la revendication 4, servant à des applications relatives à des automobiles, motos, machines industrielles, machines de construction et machines agricoles.

6. Tuyau selon la revendication 4, servant de tuyau de turbocompresseur pour une automobile.

7. Procédé de fabrication d'un stratifié, comprenant la liaison directe d'une couche (1) et d'une couche (2), dans lequel
la couche (1) est une couche dont la composition comprend
100 parties en masse d'un caoutchouc à base d'halogène (A) consistant en un ou plusieurs composés sélectionnés parmi un caoutchouc d'épichlorhydrine (ECO) et un caoutchouc acrylique (ACM),
1 à 30 parties en masse d'un composé inorganique (B) contenant au moins un élément choisi parmi les éléments du groupe 2 et du groupe 13, ainsi qu'un atome d'oxygène,
10 à 300 parties en masse de noir de carbone, et
au moins 0,2 partie en masse et au plus 10 parties en masse d'un sel d'onium consistant en le chlorure de dialkyl(C₁₄₋₁₈)diméthylammonium, et
la couche (2) est une couche d'un polymère halogéné (C) (à l'exclusion du caoutchouc à base d'halogène de la couche (1)) ;
le polymère halogéné (C) étant un caoutchouc à base de fluor sélectionné dans le groupe constitué par les élastomères d'un copolymère de fluorure de vinylidène (VdF)/hexafluoropropylène (HFP), d'un copolymère de VdF/tétrafluoroéthylène (TFE)/HFP, d'un copolymère de VdF/TFE/perfluoro(éther alkylvinylique) (PAVE), d'un copolymère de TFE/propylène/VdF, d'un copolymère d'HFP/éthylène/VdF, d'un copolymère de TFE/propylène et d'un copolymère d'HFP/éthylène, et
contenant un agent de réticulation à base de polyol.
